(19)

Europäisches Patentamt
European Patent Office
Office européen des brevets

(11)  EP 1 502 770 B1

(12)  **EUROPEAN PATENT SPECIFICATION**

(45) Date of publication and mention
of the grant of the patent:
**09.04.2008  Bulletin 2008/15**

(51) Int Cl.:
***B60C 9/22*** *(2006.01)*

(21) Application number: **04103662.5**

(22) Date of filing: **29.07.2004**

(54) **Motorcycle radial tyre**

Motorrad-Radialreifen

Pneumatique radial pour moto

(84) Designated Contracting States:
**DE ES FR IT**

(30) Priority: **01.08.2003  GB 3180494**

(43) Date of publication of application:
**02.02.2005  Bulletin 2005/05**

(73) Proprietor: **THE GOODYEAR TIRE & RUBBER COMPANY**
**Akron, OH 44316-0001 (US)**

(72) Inventors:
• **Valentine, Christopher**
  **CV3 1AY, Coventry, Warwickshire (GB)**
• **Watkins, David Robert**
  **B74 3EG, Streetly, Sutton Coldfield (GB)**

(74) Representative: **Kutsch, Bernd**
**Goodyear S.A.,**
**Patent Department,**
**Avenue Gordon Smith**
**7750 Colmar-Berg (LU)**

(56) References cited:
**EP-A- 0 455 454     EP-A- 0 756 949**
**US-A- 5 404 924**

• **PATENT ABSTRACTS OF JAPAN vol. 017, no. 222 (M-1404), 7 May 1993 (1993-05-07) -& JP 04 356202 A (SUMITOMO RUBBER IND LTD), 9 December 1992 (1992-12-09)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

**Description**

This invention relates to motorcycle tyres and in particular but not exclusively to high performance race motorcycle tyres.

Such tyres utilise very wide treads which in transverse cross-section are sharply curved to provide good contact with the road surface when the motorcycle is steeply banked in cornering. Providing a consistent ground contact area or 'tyre footprint' under all conditions is a major problem in determining general vehicle handling. Of particular importance in race motorcycle tyres is the provision of high cornering power with the good stability to maximise cornering speeds under race conditions and the maintenance of tyre shape and footprint under conditions of heavy braking, acceleration and cornering.

Motorcycle race tyres have short sidewalls which extend to the tread edges radially and axially outwardly from the tyre beads. The beads provide engagement to the wheel-rim on tapered bead seats. The sidewalls are reinforced by a carcass ply or plies which when tensioned by the inflation pressure act together with sidewall geometry to provide location of the curved tread regions to withstand cornering forces.

The sharply curved tread region of the tyre is specially reinforced by a reinforcing breaker to give the required structural rigidity to allow for banking over of the motorcycle when cornering whilst giving sufficient flexibility to allow localised tread flattening in the ground contact patch for good road grip.

The breaker usually comprises two main breaker plies of rubber reinforced by closely spaced, parallel reinforcement cords of high modulus material such as aramid, steel or the like. These two plies are positioned such that the cords of each ply extend at an acute angle to one side of the centre line of the tread of the tyre the cords of one ply being to the left and the other to the right.

To improve high speed performance it has become common in such tyres to provide over the main breaker plies an additional cap or bandage ply in the form of a side by side winding of a single cord or a small number of cords in the form of a strip to provide a reinforcement layer which is a winding of cord substantially parallel to the circumferential centreline of the tyre.

Similar bandaged breaker constructions are known in tyres for cars. Car tyres have breakers which are substantially flat axially of the tyre and the zero degree bandage acts to restrict radial expansion at high speed. In car tyres zero degree bandages have been disclosed which have changing spacing between adjacent windings to give additional bandage effect at the breaker edges in the tyre shoulders. Also in Japanese patent number 61 - 15604 it has been suggested to form the bandage as a series of zero degree cord strips spaced apart across the breaker width. Such constructions, however, are intended to further reinforce car tyre with substantially flat breakers to improve breaker integrity at high speed or to avoid breaker edge looseness.

In a high speed motorcycle tyre it has been proposed to change the spacing of a single wound cord across the width of the tyre tread. For example in EP-A-0 756 949 it is proposed to vary the cord spacing so as to provide a uniform tension state in the belt structure under the effect of the centrifugal force acting on the tyre in working conditions.

However, there is a need not only to control centrifugal force but to provide in addition the ability to modify the contact patch to give different grip levels in the longitudinal and axial directions to give the necessary resultant consistent high levels of grip at different angles of lean of the motorcycle so that the rider can avail himself of maximised grip in conditions of braking and accelerating whilst banked over at different angles entering and leaving a corner.

US-A- 5,404,924 or JP-A-04-356202 describe a motorcycle tyre according to the preamble of claim 1.

It is the object of the present invention to provide a breaker which has such properties and thus to still further improve the stability and cornering power of high performance motorcycle tyres when subjected to high braking and acceleration forces whilst cornering.

The invention is defined by the features of claim 1.

By camber value is meant the ratio C/L between the radial distance C from the centre to the edge of the tyre tread and the axial distance L between the centre and edge of the tread.

Preferably the spaced apart strips are formed by a single strip wound circumferentially around the tyre at a winding pitch greater than the strip width to.

The winding pitch may be in the range of 1.5 times to 3.0 times the width of the strip and in a preferred embodiment the winding pitch is 2.0 times the width of the strip.

The width W of the strip is preferably in the range of 3 to 20 mm and in one a preferred construction the width is 15 mm..

Furthermore the strips can have differing widths W1, W2 etc. according to the stiffness required in each part of the tread. Also the gap spacing G can be varied between different pairs of adjacent strips. The gap spacings G1, G2, etc between adjacent strips may be determined from the average width of each pair of adjacent strips by the formula:

$$G = (W1 + W2)/2$$

The reinforcement cords may be of any of the normal high modulus materials used in breakers including nylon, rayon, polyester, aramid, PEN (Polyethylene naphthalene 2,6 dicarboxylate, PET (polyethylene terephthalate, glass and steel.

Further aspects of the present invention will become apparent from the description of the following embodiments in conjunction with the attached diagrammatic drawing in which:-

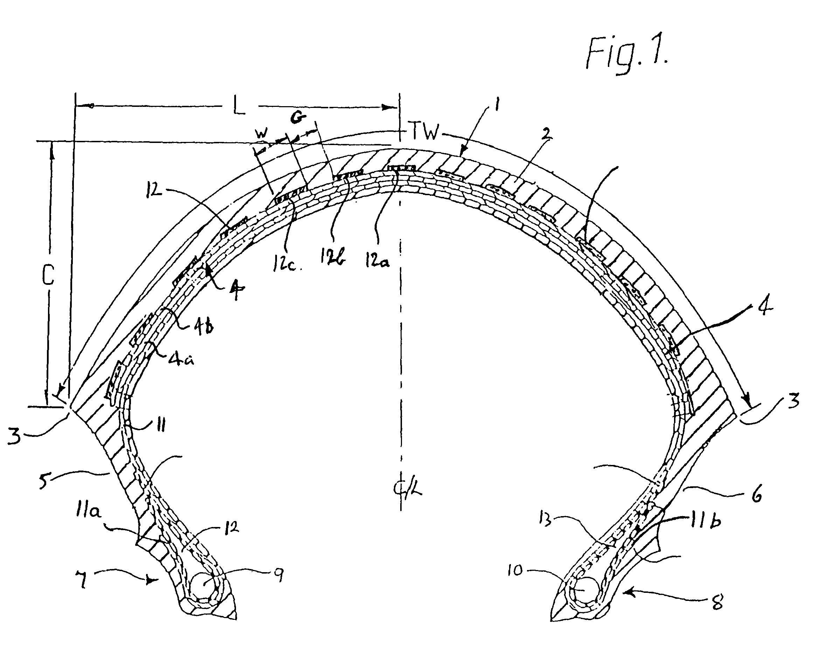

Figure 1 shows in cross-section a motorcycle tyre intended for high speed racing.

The tyre of Figure 1 is a 195/75R420 motorcycle race tyre which has a camber value C/L of 0.6. It has a convex tread region 1 which is a plain none patterned tread 2 having tread edges 3. The tread region 1 is reinforced by a breaker assembly 4.

The tread region 1 is supported by a toroidal carcass which has a pair of sidewalls 5 and 6 terminating in bead regions 7 and 8. Each bead region is reinforced by an inextensible annular bead core 9 ad 10. Extending between each bead region 7 and 8 is a tyre carcass reinforcement ply 11 which is anchored in each bead region by being turned around the respective bead core 7 and 8 laterally from the inside to the outside to form a ply turn-up 11a and 11 b. The carcass reinforcement ply 11 comprises one ply of tyre fabric comprising rubber covered nylon cords of 2/94 TEX laid with the cords at between 50° and 90° to the tyre circumferential direction. Whilst the embodiment here comprises one carcass ply it may comprise multiple plies.

A hard rubber apex 12 is provided radially outwards of each bead core 9 between the main carcass ply 11 and each ply turn-up 11 a and 11 b.

The breaker assembly 4 comprises two breaker plies 4a and 4b which are rubber pies reinforced by parallel cords of Kevlar (Registered Trade Mark) aramid cord tyre fabric each of 2/165 TEX. The cords in each of the breaker plies are oppositely inclined to each other at an angle of between 18°-30° and preferably 25° to the circumferential direction of the tyre. The radially inner breaker ply 4a is narrower than the radially outer breaker ply 4b.

On top of the outer breaker ply 4b there is a bandage ply 12. In cross section of the tyre as shown in Figure 1 the bandage can be seen to comprise spaced apart strips 12a, 12b 12c etc. Each strip comprises fifteen adjacent cords of nylon tyre reinforcement cord embedded in rubber, the width W of the strips is 15 mm and they are spaced apart by a gap distance G which in this case is 15 mm although different widths and spacings may be used. In this tyre the strips are made by winding a single strip of around the tyre after the main breaker plies 4a and 4b have been fitted. The winding is begun at one side of the tyre and continued at a pitch per tyre revolution of 30 mm so as to give a gap spacing of 15 mm. Finally the tread strip 2 is fitted and the tyre vulcanised in a tyre press.

As an alternative to a single winding it is possible to construct the bandage by forming separate hoops of reinforcement strip at spaced apart positions around the tyre. Alternatively each strip can be made by a single cord wound around the tyre to form a strip and then moved in one turn a distance axially to give the gap space and then beginning to wind the next strip.

Furthermore the strips can have differing widths W1, W2 etc. according to the stiffness required in each part of the tread. Also the gap spacing G can be varied between different pairs of adjacent strips. The gap spacings G1, G2, etc between adjacent strips may be determined from the average width of each pair of adjacent strips by the formula:

$$G = (W1 + W2)/2$$

Of course the width of strip chosen, the cord material and the spacing between adjacent strips is determined according to the desired final properties at each part of the tread of the tyre.

The resulting tyre has a breaker which has properties effected by the spaced apart strips but most importantly the strips provide as well as the necessary resistance to high speed growth contributions to the longitudinal and axial bending stiffness of the tread strip in the small elemental regions which form the contact patch at any instant in a novel way. As a result the tyres have improved high speed performance combined with improved drive / braking force transmission in combination with high cornering power.

**Claims**

1. A motorcycle tyre comprising a tread reinforced between its edges by a breaker assembly (4), a reinforcing carcass ply (11) of rubber covered cords radially inside the breaker assembly (4) and extending between two bead regions (7, 8) and wrapped in each bead region (7, 8) around an annular bead core (9,10) to form carcass ply turn-ups (11a, 11b)and between the tread edges and bead regions and tyre sidewalls wherein the tread has in its normally inflated fitted condition a camber value C/L of between 0.5 and 0.7 and the breaker assembly (4) includes a bandage (12) radially outwards of the main breaker plies comprising a series of spaced apart strips (12a, 12b, 12c, ...) each having a width (W), a gap spacing (G) between adjacent strips and comprising a group of closely space parallel reinforcement cords laid at substantially zero degrees to the centreline of the tyre, **characterised in that** the spaced apart strips are formed by a single strip wound circumferentially around the tyre at a winding pitch greater than the strip width (W) so as to space adjacent strips apart in cross section of the tyre by gap spacings (G), or **in that** the spaced apart strips comprise discrete circumferentially extending strips having widths (W1, W2, ..., Wn) and gap spacing between adjacent strips (G1, G2, ..., Gn), the discrete circumferentially extending strips forming separate hoops of reinforcement strip at spaced apart positions around the tyre.

2. The motorcycle tyre according to claim 1, **characterised in that** the widths of the discrete circumferentially extending strips (W1, W2, ..., Wn) are all equal and the gap spacings (G1, G2, ..., Gn) are all equal.

3. The motorcycle tyre according to claim 1, **characterised in that** the widths of the discrete circumferentially extending strips (W1, W2, ..., Wn) are different across the width of the tyre.

4. The motorcycle tyre according to claim 1 or 3, **characterised in that** the gap spacings (G1, G2, ..., Gn) of the discrete circumferentially extending strips are different.

5. The motorcycle tyre according to claim 4, **characterised in that** the gap spacings (G1, G2, ..., Gn) between adjacent strips are determined from the average width of adjacent strips by the formula

$$G = (W1 + W2)/2$$

6. The motorcycle tyre according to at least one of the previous claims, **characterised in that** the winding pitch is in the range of 1.5 times to 2.5 times the width (W) of the strip so that the gap spacing (G) between adjacent strips is in the range of 0.5 to 1.5 times the strip width (W).

7. The motorcycle tyre according to at least one of the previous claims, **characterised in that** the winding pitch is 2.0 times the width (W) of the strip.

8. The motorcycle tyre according to at least one of the claims 1 to 7, **characterised in that** the strip has a width (W) in the range of 10 to 20 mm or is 15 mm, and/or that the reinforcement cords of the strip comprise nylon.

**Patentansprüche**

1. Motorradreifen, umfassend eine zwischen ihren Kanten durch eine Protektoranordnung (4) verstärkte Lauffläche, eine Verstärkungskarkassenlage (11) aus gummibedeckten Korden radial innerhalb der Protektoranordnung (4) und sich zwischen zwei Wulstbereichen (7, 8) erstreckend und in jedem Wulstbereich (7, 8) um einen ringförmigen Wulstkern (9, 10) herumgeschlagen, um Karkassenlagenumschläge (11a, 11b) zu bilden, und zwischen den Laufflächenkanten und Wulstbereichen und Reifenseitenwänden, wobei die Lauffläche in ihrem normal aufgeblasenen eingesetzten Zustand einen Sturzwert C/L von 0,5 bis 0,7 hat und die Protektoranordnung (4) eine Bandage (12) radial auswärts von den Hauptprotektorlagen umfasst, die eine Serie voneinander beabstandeter Streifen (12a, 12b, 12c...) umfasst, die jeder eine Breite (W) haben, einen Spaltabstand (G) zwischen benachbarten Streifen und eine Gruppe eng beabstandeter paralleler Verstärkungskorde umfassen, die mit im Wesentlichen null Grad zur Mittellinie des Reifens aufgelegt sind, **dadurch gekennzeichnet, dass** die voneinander beabstandeten Streifen von einem einzigen Streifen gebildet werden, der in Umfangsrichtung mit einer Wicklungsschlaglänge um den Reifen herumgewickelt ist, die größer als die Streifenbreite (W) ist, um benachbarte Streifen im Querschnitt des Reifens durch Spaltabstände (G) voneinander zu beabstanden, oder **dadurch**, dass die voneinander beabstandeten Streifen diskrete, sich in Umfangsrichtung erstreckende Streifen mit Breiten (W1, W2...Wn) und einen Spaltabstand zwischen benachbarten Streifen (G1, G2...Gn) aufweisen, wobei die diskreten, sich in Umfangsrichtung erstreckenden Streifen separate Schlaufen von Verstärkungsstreifen an voneinander beabstandeten Positionen um den Reifen herum bilden.

2. Motorradreifen nach Anspruch 1, **dadurch gekennzeichnet, dass** die Breiten der diskreten, sich in Umfangsrichtung erstreckenden Streifen (W1, W2...Wn) alle gleich sind und die Spaltabstände (G1, G2...Gn) alle gleich sind.

3. Motorradreifen nach Anspruch 1, **dadurch gekennzeichnet, dass** die Breiten der diskreten, sich in Umfangsrichtung erstreckenden Streifen (W1, W2...Wn) über die Breite des Reifens unterschiedlich sind.

4. Motorradreifen nach Anspruch 1 oder 3, **dadurch gekennzeichnet, dass** die Spaltabstände (G1, G2...Gn) der diskreten, sich in Umfangsrichtung erstreckenden Streifen verschieden sind.

5. Motorradreifen nach Anspruch 4, **dadurch gekennzeichnet**, das die Spaltabstände (G1, G2...Gn) zwischen benachbarten Streifen durch die Formel

$$G = (W1 + W2)/2$$

aus der durchschnittlichen Breite benachbarter Streifen ermittelt werden.

6. Motorradreifen nach mindestens einem der vorhergehenden Ansprüche, **dadurch gekennzeichnet, dass** die Wicklungsschlaglänge im Bereich von 1,5 bis 2,5 mal die Breite (W) des Streifens liegt, sodass der Spaltabstand (G) zwischen benachbarten Streifen im Bereich von 0,5 bis 1,5 mal die Streifenbreite (W) liegt.

7. Motorradreifen nach mindestens einem der vorhergehenden Ansprüche, **dadurch gekennzeichnet, dass** die Wicklungsschlaglänge 2,0 mal die Breite (W) des Streifens beträgt.

8. Motorradreifen nach mindestens einem der Ansprüche 1 bis 7, **dadurch gekennzeichnet, dass** der Streifen eine Breite (W) im Bereich von 10 bis 20 mm hat oder 15 mm breit ist, und/oder dass die Verstärkungskorde des Streifens Nylon enthalten.

**Revendications**

1. Bandage pneumatique pour motocyclette comprenant une bande de roulement renforcée entre ses bords par un assemblage de nappes de sommet (4), une nappe de carcasse de renforcement (11) constituée par des câblés enrobés de caoutchouc, en position radiale à l'intérieur de l'assemblage de nappe de sommet (4) et s'étendant entre deux zones de talons (7, 8) et s'enroulant, dans chaque zone de talon (7, 8) autour d'une tringle de talon annulaire (9, 10) pour former des retournements de nappe de carcasse (11a, 11b) entre les bords de la bande de roulement et les zones de talon et les flancs du bandage pneumatique, la bande de roulement possédant, à son état normalement gonflé, une valeur de carrossage C/L entre 0,5 et 0,7 et l'assemblage de nappes de sommet (4) englobant un bandage (12) en position radiale à l'extérieur des nappes de sommet principales comprenant une série de bandes espacées les unes des autres (12a, 12b, 12c,...) possédant chacune une largeur (W), un écartement (G) entre des bandes adjacentes et comprenant un groupe de câblés de renforcement parallèles étroitement espacés posés en formant essentiellement un angle de 0° par rapport à la médiane du bandage pneumatique, **caractérisé en ce que** les bandes espacées les unes des autres sont réalisées à l'aide d'une bande unique qui vient s'enrouler en direction circonférentielle autour du bandage pneumatique à concurrence d'un pas d'enroulement supérieur à la largeur de bande (W) de façon à espacer des bandes adjacentes dans la section transversale du bandage pneumatique pour obtenir les écartements (G), ou bien **en ce que** les bandes espacées les unes des autres comprennent des bandes discrètes s'étendant en direction circonférentielle possédant des largeurs (W1, W2, ..., Wn) et des écartements entre des bandes adjacentes (G1, G2, ..., Gn), les bandes discrètes s'étendant en direction circonférentielle formant des cercles séparés d'une bande de renforcement à des positions espacées les unes des autres autour du bandage pneumatique.

**2.** Bandage pneumatique pour motocyclette selon la revendication 1, **caractérisé en ce que** les largeurs des bandes discrètes s'étendant en direction circonférentielle (W1, W2, ..., Wn) sont toutes égales et les écartements entre des bandes adjacentes (G1, G2, ..., Gn) sont tous égaux.

**3.** Bandage pneumatique pour motocyclette selon la revendication 1, **caractérisé en ce que** les largeurs des bandes discrètes s'étendant en direction circonférentielle (W1, W2, ..., Wn) sont différentes sur la largeur du bandage pneumatique.

**4.** Bandage pneumatique pour motocyclette selon la revendication 1, **caractérisé en ce que** les écartements (G1, G2, ..., Gn) des bandes discrètes s'étendant en direction circonférentielle sont différents.

**5.** Bandage pneumatique pour motocyclette selon la revendication 4, **caractérisé en ce que** les écartements entre des bandes adjacentes (G1, G2, ..., Gn) sont déterminées à partir de la largeur moyenne des bandes adjacentes en se référant à la formule :

$$G = (W1+W2)2$$

**6.** Bandage pneumatique pour motocyclette selon au moins une des revendications précédentes, **caractérisé en ce que** le pas d'enroulement se situe dans la plage de 1,5 fois à 2,5 fois la largeur (W) de la bande, de telle sorte que l'écartement (G) entre des bandes adjacentes se situe dans la plage de 0,5 à 1,5 fois la largeur de bande (W).

**7.** Bandage pneumatique pour motocyclette selon au moins une des revendications précédentes, **caractérisé en ce que** le pas d'enroulement s'élève à 2,0 fois la largeur (W) de la bande.

**8.** Bandage pneumatique pour motocyclette selon au moins une des revendications 1 à 7, **caractérisé en ce que** la bande possède une largeur (W) dans la plage de 10 à 20 mm ou s'élève à 15 mm, et/ou **en ce que** les câblés de renforcement de la bande comprennent du nylon.

Fig.1.

EP 1 502 770 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61015604 A
- EP 0756949 A
- US 5404924 A
- JP 4356202 A